(19) Europäisches Patentamt
European Patent Office
Office européen des brevets

(11) **EP 2 133 793 B1**

(12) **EUROPEAN PATENT SPECIFICATION**

(45) Date of publication and mention
of the grant of the patent:
**12.08.2015 Bulletin 2015/33**

(51) Int Cl.:
***G06F 9/48*** *(2006.01)*

(21) Application number: **08157958.3**

(22) Date of filing: **10.06.2008**

(54) **A multithreaded processor and a mechanism and a method for executing one hard real-time task in a multithreaded processor**

Multithreaded Prozessor und Mechanismus und Verfahren zur Durchführung einer harten Echtzeitaufgabe in einem multithreaded Prozessor

Un processeur multithread, ainsi qu'un mécanisme et un procédé d'exécution d'une tâche dure en temps réel dans un processeur multithread

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**16.12.2009 Bulletin 2009/51**

(73) Proprietor: **Barcelona Supercomputing Center-Centro Nacional de Supercomputación 08034 Barcelona (ES)**

(72) Inventor: **Cazorla Almeida, Francisco Javier 35100, San Fernando de Maspalomas Las Palmas (ES)**

(74) Representative: **ZBM Patents - Zea, Barlocci & Markvardsen Plaza Catalunya, 1 08002 Barcelona (ES)**

(56) References cited:
**US-A1- 2005 132 038**

• **KWOK-WA LAM; KWOK-HIN CHANG; ZHIWEI WANG; SHEUNG-LUN HUNG: "Scheduling aperiodic tasks in fixed-priority preemptive systems" PROCEEDINGS OF 23RD IFAC/IFIP WORKSHOP ON REAL TIME PROGRAMMING 1998, vol. -, no. -, 1998, pages 61-65, XP008098349**
• **WEI BA ET AL: "A novel dynamic fuzzy threshold preemption scheduling algorithm for soft real-time systems" DECISION AND CONTROL, 2007 46TH IEEE CONFERENCE ON, IEEE, PI, 1 December 2007 (2007-12-01), pages 4584-4589, XP031204702 ISBN: 978-1-4244-1497-0**
• **SHAOXIONG HUA ET AL: "Power minimization techniques on distributed real-time systems by global and local slack management" DESIGN AUTOMATION CONFERENCE, 2005. PROCEEDINGS OF THE ASP-DAC 2005. A SIA AND SOUTH PACIFIC SHANGHAI, CHINA JAN. 18-21, 2005, PISCATAWAY, NJ, USA,IEEE, vol. 2, 18 January 2005 (2005-01-18), pages 830-835, XP010814475 ISBN: 978-0-7803-8736-2**
• **WILHELM R ET AL: "The worst-case execution-time problem?overview of methods and survey of tools" ACM TRANSACTIONS ON EMBEDDED COMPUTING SYSTEMS (TECS), vol. 7, no. 3, April 2008 (2008-04), pages 36-53, XP002502848**

**Description**

The present invention relates to a method for executing one Hard Real-Time (HRT) task in a multithreaded processor. More specifically, the invention relates to a method that allows the execution of one Hard Real-Time (HRT) task in a multithreaded processor together with a plurality of non-hard real-time tasks, including Soft Real-Time Tasks (SRT) and Non Real-Time (NRT) tasks in a multithreaded processor.

The invention also relates to a multithreaded processor, and a mechanism for executing one HRT task in a multithreaded processor suitable for carrying out such a method.

Preferably, the invention is applied in embedded real-time systems.

**DEFINITIONS**

Certain terms throughout the following description refer to particular system components. As one skilled in the art will appreciate, microprocessor companies may refer to a component by different names. This document does not intend to distinguish between components that differ in name but in function.

The term *"connect"* is intended to mean either an indirect or direct electrical connection. Thus, if a first device couples to a second device, that connection may be through a direct electrical connection, or through an indirect electrical connection via other devices and connections.

The term "*multithreaded processor*" is intended to mean any type of processor that allows to execute more than one thread at the same time at that has some hardware resources shared between those threads. Examples of multithreaded processors are: simultaneous multithreading processors, fine grain multithreading processors, coarse grain multithreaded processors, multicore processors, or any combinations of them.

The term "*Hard Real-Time task*" or "*HRT task*" refer to those tasks that require absolute time-predictability such that an execution deadline should never be missed. In contrast the term "*Non-Hard Real-Time task*" or "*NHRT task*" refer to the tasks with soft real-time (SRT) constraints or soft-real time tasks, which are more relaxed in the sense that deadlines could occasionally be missed; or tasks without time constrains (Non Real-Time or NRT tasks).

The term "*establishing a threshold*" refers to determining the threshold and writing the established threshold into a hardware storage structure.

The terms "*task*" and "thread" are used interchangeably.

**BACKGROUND ART**

Embedded systems have specific constraints and characteristics, such as real-time constraints, low-power requirements, and severe cost limitations, which differentiate them from general-purpose systems. Historically, processors for embedded hard real-time markets typically have been characterized by a simple architecture, encompassing short pipelines and in-order execution in order to ease the computation of the worst-case execution time (WCET).

However, a significant percentage of real-time application systems require or may improve their functionality, if the processors could provide higher performance. These applications range from soft-real time applications like video-coding and decoding applications, to hard real-time applications like automotive, avionic applications and industrial control systems.

Multithreaded processors can provide this additional performance required by real-time systems. Multithreaded (MT) processors allow the execution of several tasks at the same time, which leads to both, higher performance and a reduced number of processors required in a given system. Moreover, resource sharing in these processors allows them to have good "performance/cost" and "performance per Watt" ratios. This characteristic makes MT processors a good option for embedded real-time systems.

However, at the same time, resource sharing causes the execution of applications to become highly variable, making MT processors inappropriate for embedded real-time systems. That is, there is a major drawback that impedes the use of MT processors in embedded real-time systems without further improvements: the execution time of tasks on a MT processor becomes highly uncontrolled as tasks share resource dynamically at execution time in an uncontrolled way. Under these circumstances, the real-time constraints of embedded systems cannot be guaranteed.

Two main approaches have been proposed in order to eliminate this unpredictability.

On the one hand, some hardware proposals provide full isolation in the execution of hard-real time tasks. That is, the hardware allows the execution of one HRT task and a plurality of NRT tasks by providing an interaction-free execution of the HRT task. In this category we find the documents *[A. El-Haj-Mahmoud, A. S. AL-Zawawi, A. Anantaraman, and E. Rotenberg. Virtual Multiprocessor: An Analyzable, High-Performance Microarchitecture for Real-Time Computing. Proceedings of the 2005 International Conference on Compilers, Architecture, and Synthesis for Embedded Systems (CASES'05), pp. 213-224, September 2005]* and *[Infineon Technologies AG. TricoreTM2 Architecture Manual]*. In the former document, authors propose an architecture that provides an interference-free execution between threads in a MT architecture that allows the execution of HRT tasks. This proposal requires changing the architecture of the processor so that no interaction between threads is allowed in such a way that NHRT tasks can never delay the HRT task. In the latter proposal, a second NHRT task is allowed to run with a HRT task in a very limited way, so that it never delays the HRT task.

On the other hand, in *[A. Anantaraman, K. Seth, K. Patil, E. Rotenberg, and F. Mueller. Virtual Simple Architecture (VISA): Exceeding the Complexity Limit in Safe Real-Time Systems. Proceedings of the 30th IEEE/ACM International Symposium on Computer Architecture (ISCA-30), pp. 350-361, June 2003]*, authors propose an approach where the WCET is specified assuming a virtual simple architecture (VISA). The actual architecture used for execution is different to the architecture used to estimate the WCET, and typically more complex. On average, the execution in the complex architecture is faster than in the simple architecture. However, since WCET was not derived for the complex architecture explicitly, means are required for dynamically confirming that the tasks execution time is in fact bound by the WCET. This is achieved by dividing the task into multiple smaller sub-tasks. Each sub-task is assigned a soft intermediate deadline, called a checkpoint, which is based on the latest allowable completion time of the sub-task assuming it was executing on the VISA plus some extra time required to switch from the complex mode to the simple (VISA) mode. Accordingly, if a sub-task misses its checkpoint, then the complex architecture is reconfigured to a simple mode of operation that directly implements the VISA specification (e.g. out-of-order execution is disabled, the fetch unit reverts to static branch prediction, simultaneous multithreading is disabled, etc.). The unfinished sub-task and all remaining sub-tasks are executed in the simple architecture mode, ensuring that the WCET bound is not exceeded in spite of the missed checkpoints.

The two main drawbacks of VISA are the following: First, VISA has not been proven to work on multithreaded architectures, and second, it requires splitting each HRT task to be run into sub-tasks, which may imply re-programming the application or may not be feasible for some applications.

US 2005/0132038 discloses a method comprising measuring an amount of calculation of a process obtained through calculation processing by the calculation resource, generating an interrupt to the calculation processing using the calculation resource and acquiring the amount of calculation acquired by an interrupt generation time, providing the amount of calculation acquired to the calculation resource so as to calculate a slack time and determining whether said slack time is available or not, and interrupting the processing of other processes by said calculation resource if the slack time is not available.

## SUMMARY OF THE INVENTION

It is an object of the present invention to provide a mechanism for executing one Hard Real-Time (HRT) task in a multithreaded (MT) processor that allows the execution of said HRT task together with a plurality of NHRT tasks. The invention requires neither preventing the HRT task from interacting with the NHRT tasks nor dividing the HRT task into subtasks.

To achieve the above, according to a first aspect, the invention provides a mechanism for executing one Hard Real-Time (HRT) task in a multithreaded processor comprising means for verifying if the HRT task requires using a resource that is being used by at least one Non Hard Real-Time (NHRT) task; means for determining the delay caused by the NHRT task on the execution time of the HRT task; means for subtracting the determined delay from the slack time of the HRT task; means for verifying if the new value of the slack time is lower than a critical threshold; and means for stopping the NHRT tasks.

The mechanism is aware of the static slack time (also know as slack or slack time) of the HRT task. The static slack is the difference between the WCET of a task and its deadline d (StaticSlack=d-WCET), being d and WCET to well-known parameters when scheduling real-time tasks. With the mechanism, every time the HRT task is going to use a shared resource and this resource is being used by another NHRT task, the HRT task is potentially delayed. In that situation, the mechanism subtracts this delay from the remaining slack time of the HRT task. If the remaining slack reaches a minimum 'critical threshold' the NHRT tasks are stopped preventing from further delaying the HRT task. If the remaining slack time is greater than the critical threshold, NHRT tasks are allowed to run. The mechanism may optionally comprise at least one 'warn threshold', whose value must be greater than the critical threshold (and unique if there is more than one). If the remaining slack is greater than the critical threshold it is compared to all the warn thresholds. If it is lower than any of them, means are provided to reduce the speed of the NHRT task, hence reducing the resources conflicts they have with the HRT task. If the remaining slack is greater than the warn threshold the NHRT tasks are allowed to run with no constraints.

As a result, the mechanism according to the invention allows the execution of one HRT task in a multithreaded processor with shared resources between tasks. By controlling the remaining slack time, the mechanism is able to ensure that the HRT task meets its deadline always. In summary, a mechanism that controls the interference between the HRT task and the other NHRT tasks running tasks is obtained. The mechanism is able to run mixed-application (one HRT task and a number of NHRT tasks) workloads so that the number of processors required in the system is low, reducing cost and energy consumption.

In order to achieve the described object, the mechanism does not require either changing the way the WCET is computed (when computing the WCET it is assumed that the HRT task has access to all the shared resources), changing the real-time operating system or the applications themselves, or significant hardware changes (the mechanism only has to account for the amount of interferences caused by the NHRT tasks on the HRT task in each shared resource).

According to another aspect of the invention, it is provided a multithreaded (MT) processor that comprises a mechanism for executing one Hard Real-Time (HRT) task as described above.

The remaining slack threshold is initially set to the slack value measured in processor cycles. This value is computed based on values known by the system software. During the execution of the HRT task the remaining slack threshold is decremented by the delays introduced by the NHRT tasks into the execution of the HRT task. On the event that the remaining slack threshold becomes smaller than the critical threshold, the NHRT tasks are stopped. By doing this, it is possible to guarantee that the HRT task is safely executed before its deadline.

The critical threshold corresponds to the minimum slack the mechanism allows the HRT task to have. At the beginning of the execution of the HRT task, the value of the critical threshold must be smaller than the slack in processor cycles plus some cycles that the hardware requires for stopping all the NHRT tasks. The critical threshold must be set so that it also accounts for the amount of time (in processor cycles) it takes to stop all NHRT tasks preventing them from further delaying the HRT task.

The purpose of warn thresholds is to warn the hardware that the remaining slack of the HRT task is reaching a small value. On the event that the hardware detects that the remaining slack is larger than the critical threshold and it is smaller than any of the warn threshold, the hardware reduces the speed of the NHRT tasks so that it reduces the likelihood of NHRT tasks to delay the HRT task. Reducing the speed of the NHRT tasks can be done using mechanisms already implemented in actual processors. For example, in a Simultaneous Multithreading processor reducing the speed of a given thread can be done by adjusting the instruction fetch priority of that thread. Depending on the mechanisms to reduce the NHRT tasks' speed, the system software chooses the proper values for these warn thresholds. The only constraint is that warn values should be greater than the critical threshold and unique. Warn thresholds should be considered hints to the hardware and are optional in the invention.

If the mechanism does not have any warn threshold, it only compares the remaining slack against the critical threshold. If the slack is greater, the NHRT tasks are allowed to run normally. Otherwise, NHRT tasks are stopped.

According to another aspect, the invention provides a method for executing one Hard Real-Time (HRT) task in a multithreaded (MT) processor comprising the steps of:

> **a.** Determining the slack time of the HRT task and set it as the remaining slack time;
> **b.** Starting the execution of the HRT task;
> **c.** Verifying if the HRT task requires using a resource that is being used by at least one Non Hard Real-Time (NHRT) task;

In case of positive result,

> **d.** Determining the delay caused by the NHRT task;
> **e.** Subtracting the determined delay from the slack time of the HRT task;
> **f.** Verifying if the new value of the slack time is lower than a critical threshold;

In case of positive result,

> **g.** Stopping the NHRT tasks;
> **h.** Continuing the execution of the HRT task.

The method may comprise a step (**i**) of writing the determined slack time into a hardware storage structure (i.e. a hardware counter). Further, the method may also comprise a step (**j**) of establishing a critical threshold (i.e. the critical threshold is determined and written in a hardware storage structure like a hardware register).

According to another embodiment of the invention, the method comprises a step of (**k**) establishing at least one warn threshold (i.e. the warn threshold is determined and written in a hardware storage structure).

According to a preferred embodiment of the invention, step (**a**) comprises the sub-steps of:

> **a1.** Obtaining the Worst Case Execution Time (WCET) of the HRT task;
> **a2.** Obtaining the deadline of the HRT task;
> **a3.** Subtracting the obtained WCET from the obtained deadline of the HRT task.

Further, step (**a**) also comprises the sub-steps of:

> **a4.** Obtaining the MT processor frequency;
> **a5.** Multiplying the determined slack time by the obtained processor frequency.

In this way, slack time is provided in processor cycles.

In case of negative result in step (**f**), the method may comprise the steps of:

> l. Verifying if the new value of the remaining slack time is lower than any of the established warn thresholds, said warn thresholds being higher than the critical threshold and unique;
> In case of positive result,
>
> m. Reducing the speed of the NHRT task.

In this way, if the slack time reaches a warn threshold, the mechanism reduces the speed of the other NHRT tasks, otherwise the other task is allowed to run at full throttle (speed).

According to yet another aspect, the invention provides a computer program comprising program instructions for causing a computer to perform the steps (a), (b) and (i) to (k) of the method for executing one Hard Real-Time (HRT) task in a multithreaded (MT) processor. The method includes determining the available slack for the HRT task and translating this slack into processor cycles. The method also includes establishing both the critical threshold and the warn thresholds. Said computer program may be embodied on storing means (for example, on a record medium, on a computer memory or on a read-only memory) or carried on a carrier signal (for example, on an electrical or optical carrier signal).

Obviously, said steps (a), (b) and (i) to (k) may be also implemented by hardware.

## BRIEF DESCRIPTION OF THE DRAWINGS

An embodiment of the present invention will be described in the following, only by way of non-limiting example, with reference to the appended drawing, in which:

Fig.1 is a schematic representation of the common parameters used when scheduling real-time tasks;
Fig.2 is a flow chart illustrating the steps done before the execution of the HRT task and the NHRT tasks in a multithreaded processor according to a preferred embodiment of the invention;
Fig.3 is a flow chart illustrating the steps done during the execution of the HRT task and the NHRT tasks in a multithreaded processor according to a preferred embodiment of the invention;
Fig.4 is a schematic representation illustrating the mechanism for executing one HRT task, in a multithreaded processor, according to the invention;
Fig.5 is a schematic representation of an example of architecture with a shared functional unit and a shared interconnection network in which the mechanism of Fig.4 is used; and
Fig.6 is a schematic representation of the changes required in the proposed invention to adapt it to those systems in which a local delay in a given instruction of a program does not directly translate in the same delay in the global program execution.

## DESCRIPTION OF EMBODIMENTS

In the following detailed description, embodiments of a mechanism and a method for executing one Hard Real-Time (HRT) task in a multithreaded processor with a plurality of NHRT tasks according to the invention will be described. Also, a possible implementation according to the method is presented. Other implementations maintaining the spirit of this invention are also possible.

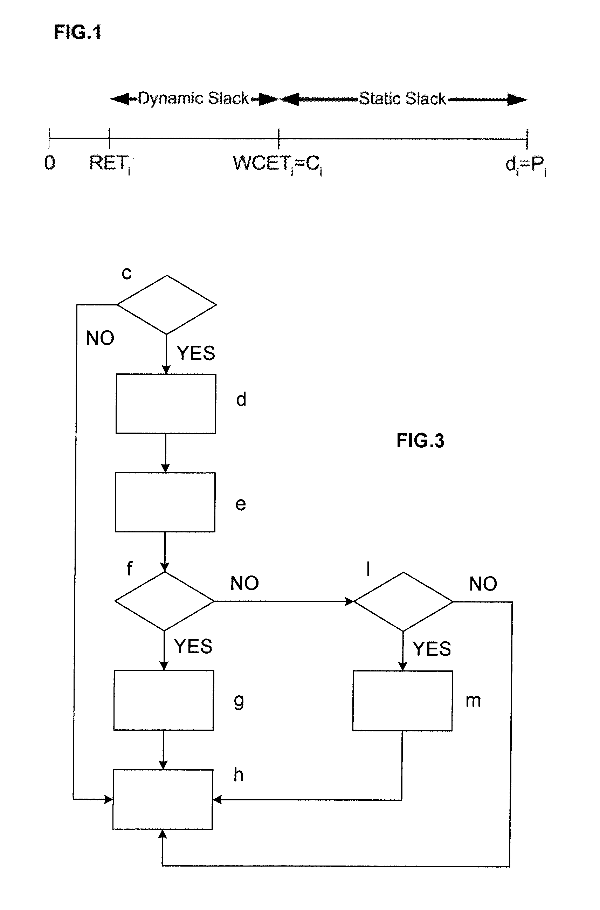

A real-time task, *i*, is characterised by the parameters shown in Fig.1:

- Deadline ($d_i$): it is the time before which the task has to be executed;
- Worst Case Execution Time ($WCET_i = C_i$): it is an upper bound of the execution time of the task, and it follows the relation $WCET_i \leq d_i$;
- Real Execution Time ($RET_i^j$), for each instance, j, of the task: it is the time that instance of the task takes to be executed, and it follows the following relation $RET_i^j \leq WCET_i$. $RET_i$ is the average execution time of the different instances of the task,

$$RET_i = \frac{1}{N} . \sum_{j=1}^{N} RET_i^j$$

- If the task is periodic, another parameter that is given is the period $P_i$, which determines the time until the next instance to the task arrives to the system. For sake of simplicity, normally in periodic systems, the deadline of each task is set equal to its period, which means that a task have to be executed before the next instance of the task arrives to the system.
- We call the static slack to the difference between the WCET of a task and its Period P, StaticSlack= P - WCET. It is called static because it is know before the run of the application.
- We call dynamic slack to the difference between the average execution time of a task RET and its WCET, DynamicSlack= WCET-RET.

The VISA approach focuses on the dynamic slack. VISA does not account for the static slack as it does not allow the RET of any task to go beyond the WCET. Further, VISA defines a mechanism to account for the difference between the RET and the WCET that is software oriented: the applications have to be split into sub-tasks.

The present invention focuses on the static slack, that will be referred as slack time or simply slack.

In general, when the WCET for a given HRT task is computed, it is assumed that the task has full access to all resources of the processor. However, this is not the case for MT architectures since at run time the HRT task is going to share it resources with other taks. Note that in MT environments the job scheduler should know how the workload can affect the WCET. Redefining WCET as the longest execution time in an arbitrary workload is not an option. By carefully selecting a workload, the WCET for a given HRT task could be made arbitrarily large. Moreover, analytical approaches to WCET would fail miserably if they would need to take another thread into consideration.

If the processor architecture provides full isolation in the execution of the HRT task, then the NHRT tasks will only access those resources not used by the HRT task and the HRT task will not be delayed by the NHRT tasks. However, in a standard multithreaded architecture, resources are shared between running tasks so tasks interact between them. Providing full isolation requires changes in the hardware so that any interaction between the HRT tasks is avoided. In order to achieve this goal significant changes are proposed to the architecture: all buffers are duplicated for each thread, functional units are assumed totally pipelined so each one can process one new operation per cycle, normal caches are not allowed, etc. Moreover, resource sharing, is the key element of the multithreaded architectures to provide high performance and good performance/cost and performance per Watt ratios.

In contrast to the disclosed state of the art, the present invention is a controlled-interference multithreaded architecture. The mechanism according to the invention allows task to interact at a hardware level: Every time a HRT task interacts with other NHRT tasks, the mechanism accounts for the delay that this interaction causes. By controlling interactions, and hence the time the HRT task is delayed, the mechanism accomplishes with HRT task deadline.

When the HRT wants to use a shared resource that is being used by another NHRT task, there is upper bound the maximum time the HRT task has to wait for the NHRT tassk, MaxDelay. The HRT task perceives this resource interaction as an 'extra' delay in the execution of the instruction accessing this resource. We refer to this delay as local delay. The local delay follows the following rule. $0 \leq$ local delay $\leq$ MaxDelay.

In [Thomas Lundqvist and Per Stenstrom. Timing Anomalies in Dynamically Scheduled Microprocessors Thomas. Proceedings of the 20th IEEE Real-Time Systems Symposium (RTSS). pp 12-21. December 1999*]* and [Jan Reineke, Björn Wachter, Stephan Thesing, Reinhard Wilhelm, Ilia Polian, Jochen Eisinger, Bernd Becker. A Definition and Classification of Timing Anomalies. 7th International Workshop on Worst-Case Execution Time (WCET) Analysis. July 2006*]* it is shown that depending on the underlying processor architecture and execution model (in-order execution, out-of-order execution, super-scalar execution, etc), a given local delay on an instruction of a program may result in a Global delay in the execution of the program, Gd where Gd > Ld. Or even worse, the local delay may result on an unbound global delay. Some of these, so called, time anomalies occur in processors that execute the instructions out of order, other in processors with caches, and other with processors supporting speculation.

In the scope of this invention we have not made any assumption about the execution model or processor architecture. In fact, the invention presented here can be applied to any multithreaded architecture in which either a local delay results in a bound global delay or any of the solutions to deal with time anomalies can be applied. Some solutions to the problem of time anomalies are proposed in [Thomas Lundqvist and Per Stenström. Timing Anomalies in Dynamically Scheduled Microprocessors Thomas. Proceedings of the 20th IEEE Real-Time Systems Symposium (RTSS). pp 12-21. December 1999].

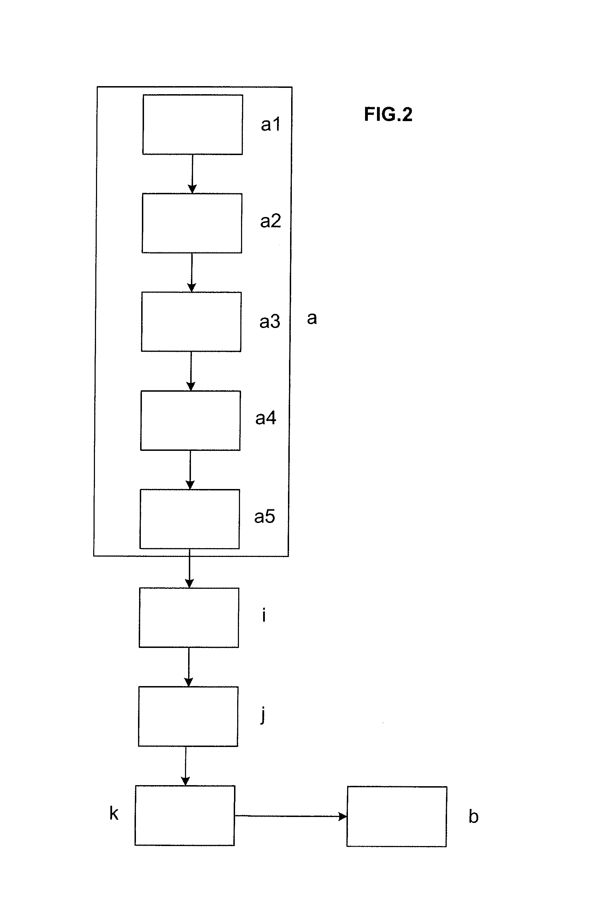

Fig.2 is a flow chart illustrating the steps done before the execution of the HRT task and the NHRT tasks in a multithreaded processor according to a preferred embodiment of the invention.

Firstly, beginning in an idle state, the MT processor must execute a HRT task and provide the hardware with the appropriate information to ensure that the HRT task executes before its WCET. In a step (a), it is necessary to obtain the slack time of the HRT task measured in processor cycles. In this case, the WCET (sub-step (a1)) and the deadline (sub-step (a2)) of the HRT task must be obtained, also the processor frequency (sub-step (a4)) must be obtained. The slack time is obtained, in a sub-step (a3), subtracting the obtained WCET from the obtained deadline of the HRT task. In a sub-step (a5) the slack in processor cycles is obtained by multiplying the obtained processor frequency by the result of sub-step (a3) and it is set as the remaining slack. Next, in step (i), the slack time in processor cycles is stored in a hardware storage structure such as a hardware register. In step (j), the critical threshold is established (i.e. the critical threshold is determined and written in a corresponding hardware storage structure such as a hardware register). On the other hand, in step (k), warn thresholds are established (i.e. the warn threshold is determined and written in a corresponding hardware storage structure such as a hardware register). Finally, in step (b), the execution of the HRT task and the NHRT tasks start.

Fig.3 is a flow chart illustrating the steps of the method to be done during the execution of the HRT task in a multithreaded processor according to a preferred embodiment of the invention.

During the execution of the HRT task, in a step (c), in each hardware shared resource of the processor it is verified if the HRT task requires using a resource that is being used by any NHRT task.

In case of positive result, in a step (d), the mechanism determines the delay caused by the conflicting NHRT tasks. Next, in a step (e) the mechanism adds all the delays from the different hardware shared resources and subtracts the result of the addition from the remaining slack time of the HRT task. In a step (f), the mechanism verifies if the new value of the remaining slack time is lower than the critical threshold. The critical threshold corresponds to the minimum slack the mechanism allows for the HRT task. In case of positive result, the mechanism, in a step (g), stops the NHRT tasks ensuring (in a step (h) the execution of the HRT task continues normally without further delays of the NHRT tasks) that the HRT application meets its deadline.

On the contrary, in case of negative result in step (f), in a step (I), the mechanism verifies if the new value of the remaining slack time is lower than any of the warn thresholds. All warn thresholds are greater than the critical threshold. In case of positive result, in a step (m), the mechanism reduces the speed of the NHRT tasks so that the NHRT tasks generate less resource conflicts with the HRT task. Obviously, the HRT application continues its execution until its completion.

It is important to highlight that it is possible to use zero or more warn thresholds. The warn registers should be considered hints to the hardware and are optional in the design. Steps (I) and (m) are not present if there is no warn thresholds.

Without departing from the spirit of the invention, it is possible to remove the critical threshold. To do so, at the beginning of the execution of the HRT task it is set as remaining slack time the initial slack time minus the critical threshold, remaining slack = slack-critical threshold. As a result, in step (f) the mechanism only has to verify whether the remaining slack is smaller than 0, in which case we proceed with step (g). Otherwise, we proceed to step (I) as explained above. Removing the critical threshold has no further implications in the invention. For sake of simplicity, during the rest of the discussion we use the critical threshold.

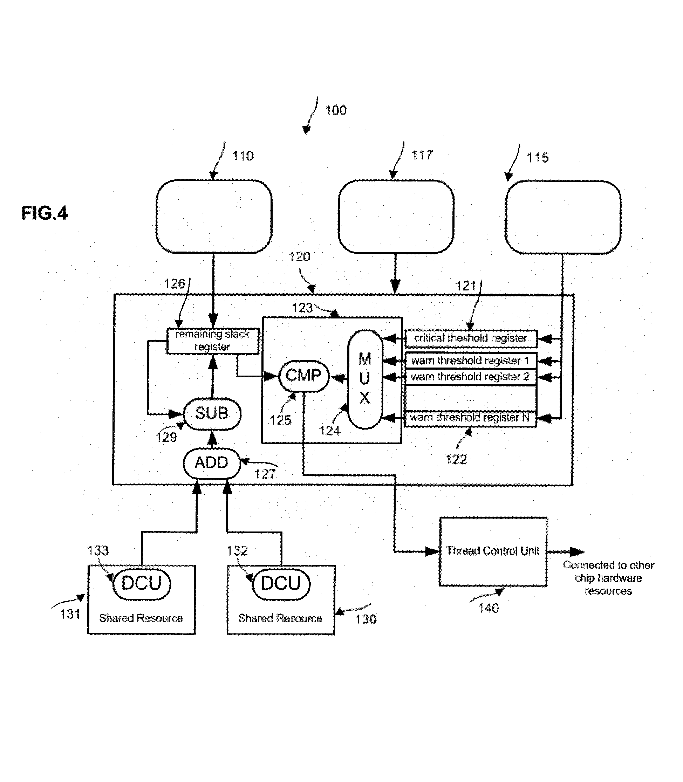

Fig.4 illustrates a possible implementation of the mechanism for executing one HRT task together with a plurality of NHRT tasks in a MT processor. The mechanism 100 comprises a module for determining the initial value of the remaining slack time of the HRT task 110; a module 115 for establishing the values of the critical threshold and the warn thresholds; and a module for starting the execution of the HRT task 117.

The module for determining the remaining slack time of the HRT task 110 obtains the Worst Case Execution Time (WCET) and the deadline of the HRT task; and the processor frequency. By subtracting the obtained WCET from the obtained deadline of the HRT task and multiplying the outcome by the processor frequency this module obtains the slack of the HRT task in processor cycles. In a final step, this module writes this value to the remaining slack hardware register 126.

Module 115 writes the critical threshold to the critical threshold register and the warn thresholds to the warn threshold registers 122. The value of the critical threshold is the minimum delay allowed for the HRT task slack. This value has to account the time it takes to stop the execution of all the NHRT tasks.

Module 117 starts the execution of the HRT task and the NHRT tasks. This module is the same than in any standard multithreaded architecture.

According to a preferred embodiment of the invention, said modules 110, 115 and 117 are implemented in the form of a computer program. The other modules in Fig.4 are implemented in hardware.

Further, module 120 represents the Slack Control Unit (SCU). SCU comprises a hardware register, remaining slack register 126, which is initially set with the slack time (in processor cycles). As the HRT task executes register 126 reports the remaining slack of the HRT task. SCU also comprises a hardware register 121 for storing the critical threshold, and a set of hardware registers 122 to save the warn thresholds. Module 120 also comprises a module for verifying if the value of the remaining slack register time is lower than all warn threshold registers 123. A possible implementation of module 123 is by means of a comparator 125 and a multiplexer 124: sequentially, the value of the slack is compared with all registers starting from the critical threshold register. This process stops whenever the mechanism finds that the remaining slack is smaller than any of these warn registers or all the registers are compared against the slack register.

The mechanism 100 includes a Thread Control Unit (TCU) 140 for reducing the speed of the NHRT tasks and stopping them. If the remaining slack register becomes smaller than any of the warn threshold registers the TCU reduces the speed of the NHRT tasks. This can be done with mechanisms already present in current processors. For example, in a SMT (Simultaneous Multithreaded) processor the fetch policy could prioritize the HRT task over the NHRT tasks. In a CMP core with a cache level shared, the cache replacement policy can be changed forcing the NHRT tasks to only use a subset of the cache. Either the case, the objective of module 140 is to reduce the speed of the NHRT tasks, hence reducing the conflicts they introduce in the HRT task. For its purpose the TCU is connected to the corresponding hardware blocks inside the chip. On the event that the remaining slack register becomes smaller that the critical threshold register the TCU stops the NHRT tasks preventing them for further delay the HRT task.

In each shared resource under consideration 130 and 131 the mechanism provides a module for verifying if the HRT task requires using a resource that is being used by any of the other NHRT tasks and determining the delay caused by the other task 132 and 133. In this particular illustration there are two shared resources 130 and 131 each containing one Delay Control Unit (DCU) 132 and 133.

In module 120, there is another module 127 that adds all the delays coming from the DCU in each shared resource. The outcome of this module is the total delay that has to be subtracted from the remaining slack register 126. This task is carried out by module 129. The outcome is written back to the remaining slack register 126.

### Example 1

Next, we show an example of MT architecture with several shared resources that allows executing one HRT task and two NHRT tasks according to the invention. The presented invention, however, can be applied to an arbitrary number of shared resources and NHRT tasks.

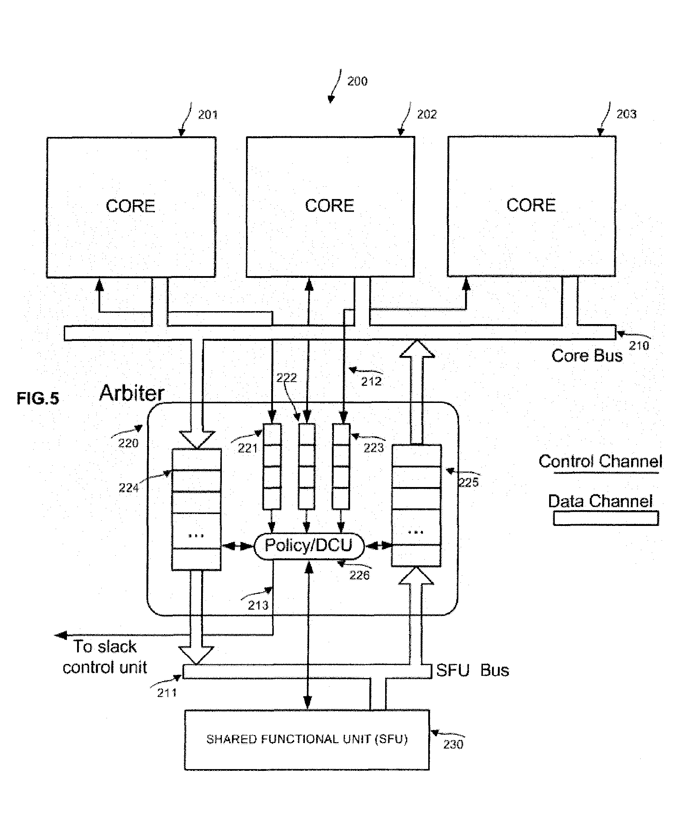

Fig.5 shows a multicore architecture 200 having three computation cores 201, 202 and 203, in which each core can execute only one thread at a time. All cores are connected to a Shared Functional Unit (SFU) 230 by an interconnection network. The interconnection network is composed of two data buses: core bus 210, a Shared Functional Unit bus 211; several control channels 212; and an arbiter 220.

In said architecture, the aim is to execute three tasks, one of which is a Hard Real-Time (HRT) task. In this case, the WCET of the HRT task is computed assuming that it has all the shared resource always available, that is, the Shared Functional Unit and the Interconnection Network.

In its normal behavior, whenever a processor has an operation to execute in the SFU it checks whether or not there is a free entry in its request queue 221, 222 or 223 in the arbiter. The control channel between the cores and the arbiter are private to each core, so it is not a source of interaction between the HRT and the other NHRT tasks. If there is a free entry the corresponding core sends the request to the arbiter. The arbiter then schedules when the core can send the instruction to be executed to the operations queue 224 using the processor bus. Let us assume that delay of the core bus is $D_1$ cycles. In this case if the HRT task wants to use the processor bus but it is used by other task, the HRT task has to be accounted a possible delay of at most $D_1$ cycles.

Inside the arbiter 220 there is a request queue for each core 221, 222 and 223. Hence, it is not possible to have interaction between threads. In each queue the requests are stored by arrival time. Once a request from the HRT task has arrived to the arbiter, it could be delayed by the other requests being processed. We assume a non-pipelined SFU 230 meaning that at every instant, only one request can be processed by the SFU 230. In case of conflict accessing the SFU, the remaining slack of the HRT task has to be decreased by the number of cycles that a request in the HRT task request queue is waiting to be processed.

The arbiter implements a policy 226 that determines which request from the oldest requests in each queue is processed. For this purpose any selection policy can be used, like FCFS (First Come First Serviced). Depending on the policy selected the delay introduced in the HRT task may vary. If the mechanism uses a prioritize-the-HRT-task policy, in the worst case the HRT task has to wait only for the request being processed by the SFU, if any. In the case of the FCFS policy, a variable number of operations (as much as operations from the NHRT tasks can be hold in the arbiter) will be processed by the arbiter before select any operation form the HRT task.

For example, let us assume that the access to the SFU bus has a delay of $D_2$ cycles and the latency of the SFU is $D_3$ cycles. Further assume that a request from the HRT task becomes ready just in the cycle in which a request of a NHRT task is sent to the SFU bus and that the selection policy prioritizes requests from the HRT task. In this case, the HRT task is going to suffer a delay of $D_2+D_3$ cycles: $D_2$ cycles of delay accessing the SFU bus to send the operation to the SFU and $D_3$ cycles of

operation in the SFU. Note that, if the request queue (221, 222 or 223) of the HRT task is full there is no need to update the remaining slack register as this delay in its execution is intrinsic to the HRT task and has not been caused by any other SRT or NRT task.

After the execution of the operation in the shared functional unit, the outcomes coming from the SFU are hold in the outcome queue 225. Again the arbiter decides in which order these outcomes are send to the corresponding cores. For every cycle that an outcome for the HRT task is delayed in the outcome queue, its remaining slack register is decremented by 1 cycle.

In this example, it is assumed full-duplex data and control channels, hence in the core bus there is no interaction between the information sent from the cores to the arbiter and the information sent from the arbiter to the cores. That is, no interaction either happens in the SFU bus among the requests in opposite directions.

In this example, the arbiter 226 also acts as a DCU (Delay Control Unit) as it is in charge of reporting the delays suffered by the HRT task to the SCU (Slack Control Unit). For that purpose, the arbiter uses the control channel 213.

This scheme can be extrapolated to any multithreaded architecture in which there are more shared resources. Hence, the mechanism according to the invention enables the execution of one HRT task on a multithreaded processor with several other NHRT tasks.

## Example 2

In the discussion in Example 1 it is assumed, without lost of generality that the global delay equals the local delay, Gd = Ld. That a delay of a given amount of cycles in the execution of a given instruction of the HRT task translates into a delay of the execution of the HRT task of at most the same number of cycles. Depending on the execution model, this cannot be the case. The only change to add in the invention to allow a global delay greater than the local delay is a map function that maps the local delay in the proper global delay, f(local delay)=global delay.

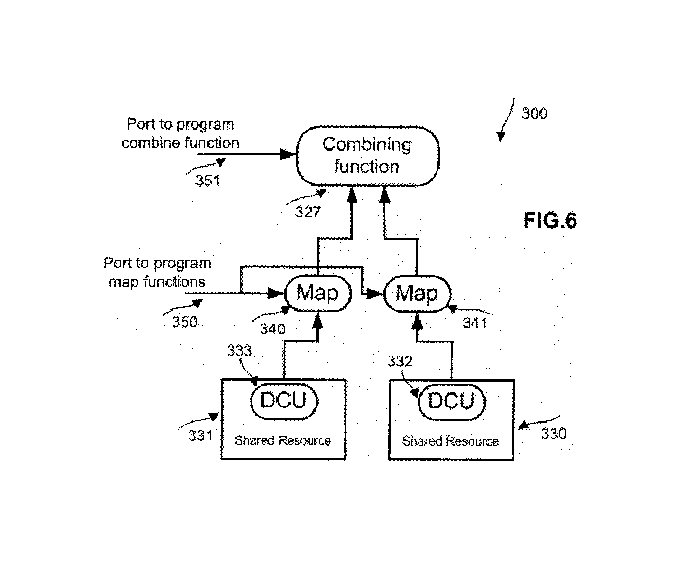

Fig.6 shows the changes to add to the description of the components of the invention, shown in Fig.4, in order to support this extra functionality. From Fig.4 the only changes required are in the connection between the Shared Resources, 130 and 131, and the logic to combine 127 all the local delays coming from all Delay Control Units 132 and 133 in all shared resources. In Fig.6 module 327 correspond to module 127 in Fig.4, 330 to 130, 331 to 131, 332 to 132 and 133 to 333 respectively. What it is new in Fig.6 is the map functions 340 and 341 for each local delay coming from each Delay Control Unit (DCU). These mapping functions translate the local delay coming from each DCU into a global delay for the HRT task. If the map function is known at design time it can be hard-wired otherwise an additional port 350 is provided to program each map function. In module 327 local delays are combined using a mathematical function, like the add function. If the mathematical function is known at design time it can be hard-wired otherwise an additional port 351 is provided to program it. The software module 117 is in charge of programming the mapping functions 340 and 341 for each shared resource and the combine function 327 before the execution of the HRT task starts.

Although the present invention has been described in detail for purpose of illustration, it is understood that such detail is solely for that purpose, and variations can be made therein by those skilled in the art without departing from the scope of the invention.

Thus, while the preferred embodiments of the methods and of the systems have been described in reference to the environment in which they were developed, they are merely illustrative of the principles of the invention. Other embodiments and configurations may be devised without departing from the scope of the appended claims.

Further, although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source code, object code, a code intermediate source and object code such as in partially compiled form, or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal, which may be conveyed via electrical or optical cable or by radio or other means.

When the program is embodied in a signal that may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

**Claims**

1. A method for executing a Hard Real-Time (HRT) task in a multithreaded (MT) processor having a plurality of hardware shared resources, the method comprising the steps of:

    **a.** Determining the slack time of the HRT task and set it as the remaining slack time comprising the substeps of:

    **a1.** Obtaining the Worst Case Execution Time (WCET) of the HRT task;
    **a2.** Obtaining the deadline of the HRT task;
    **a3.** Subtracting the obtained WCET from the obtained deadline of the HRT task;

    **b.** Starting the execution of the HRT task;
    **c.** Every time the HRT task is going to use a hardware shared resource, verifying by a module of the hardware shared resource if the resource is being used by at least one Non Hard Real-Time (NHRT) task;
    In case of the resource not being used by one or more NHRT tasks, h. continuing the execution of the HRT task; and
    In case of the resource being used by at least one NHRT task,

    **d.** Determining the delay caused by the NHRT task;
    **e.** Subtracting the determined delay from the remaining slack time of the HRT task on the execution time of the HRT task;
    **f.** Verifying if the new value of the remaining slack time is lower than a critical threshold;
    In case of the remaining slack time not being lower than a critical threshold, h. continuing the execution of the HRT task; and
    In case of the remaining slack time being lower than a critical threshold,

    **g.** Stopping the NHRT tasks; and
    **h.** Continuing the execution of the HRT task.

2. A method according to claim 1, further comprising a step (**i**) of writing the determined remaining slack time into a hardware storage structure.

3. A method according to any of claims 1 or 2, further comprising a step (**j**) of establishing the critical threshold.

4. A method according to any of claims 1 to 3, further comprising a step of (**k**) establishing at least one warn threshold.

5. A method according to claim 1, wherein step (a) comprises the sub-steps of:

    **a4.** Obtaining the MT processor frequency;
    **a5.** Multiplying the determined slack time by the obtained processor frequency.

6. A method according to claim 4 or 5, further comprising, in case of negative result in step (**f**), the steps of:

**l**. Verifying if the new value of the slack time is lower than any of the established warn thresholds, said warn thresholds being higher than the critical threshold and unique;
In case of positive result,

**m.** Reducing the speed of the NHRT tasks.

**7.** A multithreaded processor (200) adapted to execute a Hard Real-Time (HRT) task in accordance with any of claims 1 - 6,
the multithreaded processor comprising
a plurality of hardware shared resources,
means for determining the slack time of the HRT task,
means (115) for starting the execution of the HRT task,
means for verifying if a value of slack time is lower than critical threshold
and
means (129) for subtracting a determined delay from the slack time of the HRT task;
means for verifying if the new value of the slack time is lower than a critical threshold; and
means for stopping the NHRT task, **characterized in that** each hardware shared resource comprises means for verifying if the HRT task requires using a resource (230) that is being used by at least one Non Hard Real-Time (NHRT) task;
means (127, 132, 133) for determining the delay caused by the NHRT task.

**Patentansprüche**

**1.** Ein Verfahren zur Durchführung einer harten Echtzeitaufgabe (HRT-Aufgabe) in einem multithreaded (MT) Prozessor, der eine Vielzahl von gemeinsamen Hardware-Ressourcen hat, wobei das Verfahren folgende Schritte umfasst:

**a.** Feststellen der Schlupfzeit der HRT-Aufgabe und deren Einstellung als die Restschlupfzeit umfassend folgende Teilschritte:

**a1.** Erhalten der maximalen Ausführungszeit (WCET) der HRT-Aufgabe;
**a2.** Erhalten der Zeitanforderung der HRT-Aufgabe;
**a3.** Subtrahieren der erhaltenen WCET von der erhaltenen Zeitanforderung der HRT-Aufgabe;

**b.** Anfangen der Durchführung der HRT-Aufgabe;
**c.** Jedes Mal, wenn die HRT-Aufgabe im Begriff ist, eine gemeinsame Hardware-Ressource zu verwenden, die Nachprüfung durch ein Modul der gemeinsamen Hardware-Ressource, ob die Ressource durch mindestens eine nicht-harte Echtzeitaufgabe (NHRT-Aufgabe) zur der Zeit verwendet wird;
Falls die Ressource zur der Zeit nicht durch eine oder mehrere NHRT-Aufgaben verwendet wird,
h. Fortsetzen der Durchführung der HRT-Aufgabe;
und
Falls die Ressource zur der Zeit durch mindestens eine NHRT-Aufgabe verwendet wird,

**d.** Feststellen der durch die NHRT-Aufgabe verursachte Verzögerung;
**e.** Subtrahieren der festgestellten Verzögerung von der Restschlupfzeit der HRT-Aufgabe bei der Durchführungszeit der HRT-Aufgabe;
**f.** Nachprüfen, ob der neue Wert der Restschlupfzeit geringer als ein kritischer Schwellenwert ist;
Falls die Restschlupfzeit nicht kürzer als ein kritischer Schwellenwert ist,
**h.** Fortsetzen der Durchführung der HRT-Aufgabe; und
Falls die Restschlupfzeit kürzer als ein kritischer Schwellenwert ist,

**g.** Einstellen der NHRT-Aufgaben; und
**h.** Fortsetzen der Durchführung der HRT-Aufgabe.

**2.** Ein Verfahren nach Anspruch 1, weiterhin umfassend einen Schritt (i), bei dem die festgestellte Restschlupfzeit in eine Hardware-Speicherstruktur geschrieben wird.

**3.** Ein Verfahren nach einem der Ansprüche 1 oder 2, weiterhin umfassend einen Schritt (j), bei dem der kritische Schwellenwert festgelegt wird.

**4.** Ein Verfahren nach einem der Ansprüche 1 bis 3, weiterhin umfassend einen Schritt **(k),** bei dem mindestens ein Warnschwellenwert festgelegt wird.

**5.** Ein Verfahren nach Anspruch 1, wobei Schritt **(a)** folgende Teilschritte umfasst:

**a4.** Erhalten der Frequenz des MT-Prozessors;
**a5.** Multiplizieren der festgestellten Schlupfzeit mit der erhaltenen Frequenz des Prozessors.

**6.** Ein Verfahren nach Anspruch 4 oder 5, weiterhin umfassend folgende Schritte, falls das im Schritt **(f)** erhaltene Ergebnis negativ ist:

**l.** Nachprüfen, ob der neue Wert der Schlupfzeit geringer als jedweder der festgelegten Warnschwellenwerte ist, wobei die Warnschwellenwerte höher als der kritische Schwellenwert und einzig sind;

Falls das Ergebnis positiv ist,

**m.** Reduzieren der Geschwindigkeit der NHRT-Aufgaben.

7. Ein multithreaded Prozessor (200), der angepasst ist, um eine harte Echtzeitaufgabe (HRT-Aufgabe) nach einem der Ansprüche 1 - 6 durchzuführen, wobei der multithreaded Prozessor folgendes umfasst eine Vielzahl von gemeinsamen Hardware-Ressourcen,
ein Mittel zum Feststellen der Schlupfzeit der HRT-Aufgabe,
ein Mittel (115) zum Anfangen der Durchführung der HRT-Aufgabe,
ein Mittel zum Nachprüfen, ob ein Wert der Schlupfzeit geringer als ein kritischer Schwellenwert ist und ein Mittel (129) zum Substrahieren einer festgestellten Verzögerung von der Schlupfzeit der HRT-Aufgabe;
ein Mittel zum Nachprüfen, ob der neue Wert der Schlupfzeit geringer als ein kritischer Schwellenwert ist; und
ein Mittel zum Einstellen der NHRT-Aufgabe, **dadurch gekennzeichnet, dass** jede gemeinsame Hardware-Ressource folgendes umfasst
ein Mittel zum Nachprüfen, ob die HRT-Aufgabe die Verwendung einer Ressource (230) benötigt, welche zu der Zeit durch mindestens eine nicht harte Echtzeitaufgabe (NHRT-Aufgabe) verwendet wird;
Mittel (127, 132, 133) zum Feststellen der durch die NHRT-Aufgabe verursachten Verzögerung.

**Revendications**

1. Un procédé d'exécution d'une tâche dure en temps réel (HRT) dans un processeur multithread (MT) ayant une pluralité de ressources partagées de hardware, comprenant le procédé les étapes de :

    **a.** Déterminer le temps de marge de la tâche HRT et le fixer en tant que le temps de marge restant comprenant les sous-étapes de :

        **a1.** Obtenir le temps d'exécution dans le cas le plus défavorable (WCET) de la tâche HRT ;
        **a2.** Obtenir le délai de la tâche HRT ;
        **a3.** Soustraire le WCET obtenu du délai obtenu de la tâche HRT ;

    **b.** Commencer l'exécution de la tâche HRT ;
    **c.** Chaque foi que la tâche HRT va utiliser une ressource partagée de hardware, vérifier moyennant un module de la ressource partagée de hardware si la ressource est utilisée par au moins une tâche non dure en temps réel (NHRT) ;
dans le cas où la ressource n'est pas utilisée par une ou plusieurs tâches NHRT, **h.** continuer avec l'exécution de la tâche HRT ; et
dans le cas où la ressource est utilisée par au moins une tâche NHRT,

        **d.** Déterminer le retard causé par la tâche NHRT ;
        **e.** Soustraire le retard déterminé du temps de marge restant de la tâche HRT dans le temps d'exécution de la tâche HRT ;
        **f.** Vérifier si la nouvelle valeur du temps de marge restant est inférieure qu'une valeur de seuil critique ;
        dans le cas où le temps de marge restant n'est pas inférieur qu'une valeur de seuil critique,
        **h.** continuer avec l'exécution de la tâche HRT ; et
        dans le cas où le temps de marge restant est inférieur qu'une valeur de seuil critique,

            **g.** Arrêter les tâches NHRT ; et
            **h.** Continuer avec l'exécution de la tâche HRT.

2. Un procédé selon la revendication 1, comprenant en outre une étape (i) d'écriture du temps de marge restant déterminé dans une structure de stockage de hardware.

3. Un procédé selon l'une quelconque des revendications 1 ou 2, comprenant en outre une étape (j) d'établissement de la valeur de seuil critique.

4. Un procédé selon l'une quelconque des revendications 1 à 3, comprenant en outre une étape **(k)** d'établissement d'au moins une valeur de seuil d'alerte.

5. Un procédé selon la revendication 1, dans lequel l'étape (a) comprend les sous-étapes de :

        **a4.** Obtenir la fréquence du processeur MT ;
        **a5.** Multiplier le temps de marge déterminé par la fréquence du processeur obtenue.

6. Un procédé selon la revendication 4 ou 5, comprenant en outre, en cas de résultat négatif dans l'étape **(f)**, les étapes de :

        **l.** Vérifier si la nouvelle valeur du temps de marge est inférieure que l'une quelconque des valeurs de seuil d'alerte établies, étant lesdites valeurs de seuil d'alerte supérieures que la valeur de seuil critique et uniques ;

dans le cas de résultat positif,

    **m.** Réduire la vitesse des tâches NHRT.

**7.** Un processeur (200) multithread adapté pour exécuter une tâche dure en temps réel (HRT) selon l'une quelconque des revendications 1 - 6, comprenant le processeur multithread

une pluralité de ressources partagées de hardware, un moyen pour déterminer le temps de marge de la tâche HRT,

un moyen (115) pour commencer l'exécution de la tâche HRT,

un moyen pour vérifier si une valeur du temps de marge est inférieure qu'une valeur de seuil critique et un moyen (129) pour soustraire un retard déterminé du temps de marge de la tâche HRT ;

un moyen pour vérifier si la nouvelle valeur du temps de marge est inférieure qu'une valeur de seuil critique ; et

un moyen pour arrêter la tâche NHRT, **caractérisé en ce que** chaque ressource partagée de hardware comprend

un moyen pour vérifier si la tâche HRT exige utiliser une ressource (230) qui est utilisée par au moins une tâche non dure en temps réel (NHRT) ;

des moyens (127, 132, 133) pour déterminer le retard causé para la tâche NHRT.

## FIG.1

## FIG.3

**FIG.2**

**FIG.4**

FIG.5

FIG.6

**EP 2 133 793 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050132038 A

**Non-patent literature cited in the description**

- **A. EL-HAJ-MAHMOUD ; A. S. AL-ZAWAWI ; A. ANANTARAMAN ; E. ROTENBERG.** Virtual Multiprocessor: An Analyzable, High-Performance Microarchitecture for Real-Time Computing. *Proceedings of the 2005 International Conference on Compilers, Architecture, and Synthesis for Embedded Systems (CASES'05),* September 2005, 213-224
- TricoreTM2 Architecture Manual
- **A. ANANTARAMAN ; K. SETH ; K. PATIL ; E. ROTENBERG ; F. MUELLER.** Virtual Simple Architecture (VISA): Exceeding the Complexity Limit in Safe Real-Time Systems. *Proceedings of the 30th IEEE/ACM International Symposium on Computer Architecture (ISCA-30),* June 2003, 350-361
- **THOMAS LUNDQVIST ; PER STENSTROM.** Timing Anomalies in Dynamically Scheduled Microprocessors Thomas. *Proceedings of the 20th IEEE Real-Time Systems Symposium (RTSS),* December 1999, 12-21
- **JAN REINEKE ; BJÖRN WACHTER ; STEPHAN THESING ; REINHARD WILHELM ; ILIA POLIAN ; JOCHEN EISINGER ; BERND BECKER.** A Definition and Classification of Timing Anomalies. *7th International Workshop on Worst-Case Execution Time (WCET) Analysis,* July 2006
- **THOMAS LUNDQVIST ; PER STENSTRÖM.** Timing Anomalies in Dynamically Scheduled Microprocessors Thomas. *Proceedings of the 20th IEEE Real-Time Systems Symposium (RTSS),* December 1999, 12-21